# EUROPÄISCHE PATENTSCHRIFT

(11) **EP 4 231 047 B1**
(45) Veröffentlichungstag und Bekanntmachung des Hinweises auf die Patenterteilung: **04.12.2024**
(21) Anmeldenummer: 22157591.3
(22) Anmeldetag: 18.02.2022
(51) Int. Cl.: G01S 7/4865

(54) **OPTOELEKTRONISCHER SENSOR ZUR ERFASSUNG UND ABSTANDSBESTIMMUNG VON OBJEKTEN UND TRIGGERSCHALTUNG FÜR EINEN DERARTIGEN SENSOR**
OPTOELECTRONIC SENSOR FOR DETECTING AND DETERMINING THE DISTANCE OF OBJECTS AND TRIGGER CIRCUIT FOR SUCH A SENSOR
CAPTEUR OPTOÉLECTRONIQUE DESTINÉ À LA DÉTECTION ET À LA DÉTERMINATION DE LA DISTANCE DES OBJETS ET CIRCUIT DE DÉCLENCHEMENT D'UN TEL CAPTEUR

(43) Veröffentlichungstag der Anmeldung: 23.08.2023
(73) Patentinhaber: SICK AG, 79183 Waldkirch (DE)
(72) Erfinder: Bohli, Alexander, 79206 Breisach (DE); Kolb, Dr. Stephan, 79183 Waldkirch (DE); Clemens, Klaus, 79367 Weisweil (DE); Jahn, Axel, 79183 Waldkirch (DE)

(56) Entgegenhaltungen:
- DE-B3- 102017 101 501
- DE-C1- 4 002 356
- US-A1- 2017 089 756

## Beschreibung

Die Erfindung betrifft einen optoelektronischen Sensor zur Erfassung und Abstandsbestimmung von Objekten in einem Überwachungsbereich nach dem Oberbegriff des Anspruchs 1 beziehungsweise eine Triggerschaltung für einen derartigen Sensor nach Anspruch 12.

Ein bekanntes Verfahren für die optische Abstandserfassung ist die Lichtlaufzeitmessung. Man unterscheidet die pulsbasierte und die phasenbasierte Messung. In einem Pulslaufzeitverfahren werden durch eine Lichtquelle, beispielsweise eine Laserdiode, Lichtstrahlen mit kurzen Lichtpulsen ausgesandt, die zurückkehrenden Lichtpulse durch ein optisches Empfangselement, beispielsweise eine Single Photon Avalanche Dioden (SPAD) empfangen, und die Zeit bis zum Empfang der zurückkehrenden Lichtpulse gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Die Lichtlaufzeit wird dann über die Lichtgeschwindigkeit in einen Abstand umgerechnet. Optoelektronische Sensoren, die dieses Verfahren verwenden, werden häufig als Lichttaster, TOF (Time-of-Flight) Sensoren oder LI DAR (Light Detection And Ranging) Sensoren bezeichnet. Um den Messbereich zu erweitern, kann der Lichtstrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandsinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Es ist aber auch bekannt, stattdessen den gesamten Messkopf mit Lichtsendern und Lichtempfängern rotieren zu lassen

Die Genauigkeit der Abstandsbestimmung ist direkt von der Genauigkeit der Bestimmung der Lichtlaufzeit abhängig. Sie bedingt demnach eine möglichst präzise Kenntnis eines Sendezeitpunkts, an dem ein Lichtpuls die Lichtquelle des Sensors verlässt und eines Empfangszeitpunkts, an dem der zurückkehrende Lichtpuls auf das Empfangselement trifft.

Aus dem Stand der Technik ist es bekannt, ein Signal an die Lichtquelle zu senden, welches die Lichtquelle zur Emission wenigstens eines Lichtpulses aktiviert, üblicherweise durch Abgabe eines Strom- beziehungsweise Spannungspulses an die Lichtquelle. Dieses Signal, im Folgenden auch Aktivierungssignal genannt, startet gleichzeitig eine Lichtlaufzeitmessung. Die Lichtlaufzeitmessung wird durch ein Empfangssignal gestoppt, welches das optische Empfangselement beim Empfang des zurückkehrenden Lichtpulses erzeugt. Das Aktivierungssignal und das Empfangssignal werden üblicherweise an einen sogenannten Time-to-Digital-Converter (TDC) übermittelt, der die Messung der Zeit zwischen Abgabe des Triggersignal und Erzeugung des Empfangsignal bestimmt. Details zu TDCs finden sich beispielsweise in Henzler, Stephan. "Time-to-digital converters." Vol. 29. Springer Science & Business Media, 2010 oder dem Jahresbericht 2015 der Gruppe Circuits and Systems der Universät Oulu von J. Kostamovaara und T. Rahkonen.

Da die die Abgabe des Strom- beziehungsweise Spannungspulses an die Lichtquelle und somit die Emission des Lichtpulses üblicherweise mit einer Latenz nach Abgabe des Aktivierungssignals erfolgt, muss zunächst durch Lichtlaufzeitmessungen an Objekten mit bekannten Abständen eine Kalibrierung durchgeführt werden. Jedoch können beispielsweise Temperaturdrift, Alterung oder Fluktuation (Jitter) von Elektronikkomponenten zwischen der Triggerquelle und der Lichtquelle sowie der Lichtquelle selbst die Zeitdauer zwischen der Abgabe des Aktivierungssignals und der Abgabe eines Strom- beziehungsweise Spannungspulses an die Lichtquelle und somit der Emission des Lichtpulses beeinflussen und daher die Genauigkeit der Abstandsmessung beeinträchtigen.

Zur Verbesserung der Genauigkeit der Abstandsmessung ist es ebenfalls bekannt, die Emission des Lichtpulses durch einen der Lichtquelle unmittelbar nachgeordneten Lichtempfänger, beispielsweise eine Photodiode, zu detektieren, und bei Detektion des Lichtpulses die Lichtlaufzeitmessung zu starten. Durch eine solche Anordnung entfallen die oben beschriebenen negativen Einflüsse auf die Lichtlaufzeitmessung nahezu vollständig, nachteilig ist jedoch, dass die Anordnung komplex ist und insbesondere zusätzliche optische Bauteile mit entsprechendem Bauraumanspruch und Justageaufwand benötigt werden.

In der europäischen Patentanmeldung EP 3 521 856 A1 wird vorgeschlagen, in einer Schaltung zur Lichtlaufzeitbestimmung neben einem Messpfad zur Laufzeitmessung einen Kalibrierpfad vorzusehen, um die Genauigkeit der Lichtlaufzeitbestimmung zu verbessern. Der Kalibrierpfad kann insbesondere dazu eingerichtet sein, einen Laserstrom einer Laserlichtquelle zu messen. Der Laserstrom wird mittels eines Komparators mit einem Schwellenwert verglichen, bei dessen Überschreitung üblicherweise eine Emission von Laserstrahlung erfolgt. Durch Bestimmung der Zeitdauer zwischen Aktivierung der Lichtquelle und Überschreiten des Schwellenwerts des Laserstroms lässt sich die Latenz zwischen Aktivierung der Lichtquelle und Emission des Lichtpulses bestimmen und bei der Laufzeitberechnung berücksichtigen. Da die offenbarte Schaltung neben einem Messpfad einen Kalibrierpfad verwendet, ist sie entsprechend aufwendig. Eine direkte Verwendung der Schwellenwertüberschreitung des Laserstroms zum Starten der Lichtlaufzeitmessung ist nicht offenbart. Ein ähnliches System mit einer zusätzlichen Lichtquelle zur Kalibrierung ist in DE4002356 offenbart.

Ausgehend von diesem Stand der Technik ist es Aufgabe der Erfindung, einen verbesserten optoelektronischen Sensor zur Lichtlaufzeitbestimmung bereitzustellen.

Diese Aufgabe wird gelöst durch einen optoelektronischen Sensor zur Erfassung und Abstandsbestimmung von Objekten in einem Überwachungsbereich mit den Merkmalen des Anspruchs 1 beziehungsweise durch eine Triggerschaltung für einen derartigen Sensor mit den Merkmalen des Anspruchs 12.

Ein erfindungsgemäßer optoelektronischer Sensor weist wenigstens einen Lichtsender mit wenigstens einer Lichtquelle zum Aussenden von Lichtpulsen in einen Überwachungsbereich auf. Ein zugehöriger Lichtempfänger ist in der Lage, aus von Objekten im Überwachungsbereich reflektierten oder remittierten Lichtpulsen Empfangssignale zu erzeugen. Eine Steuer- und Auswerteeinheit steuert den Lichtsender und den Lichtempfänger und kann die Empfangssignale des Lichtempfängers auswerten, um Informationen über das Objekt, wie beispielsweise einen Abstand zum Sensor, zu gewinnen. Zur Abstandsbestimmung zwischen Objekt und Sensor weist die Steuer- und Auswerteeinheit eine Zeitmesseinheit auf, beispielsweise einen Time-to-Digital Converter (TDC). Die Zeitmesseinheit ist dazu eingerichtet, eine Lichtlaufzeit eines Lichtpulses aus einem zeitlichen Abstand zwischen einem Triggersignal und einem Empfangssignal des Lichtempfängers zu ermitteln. Das Triggersignal wird dabei durch eine Triggerschaltung erzeugt, die eine an der Lichtquelle des Lichtsenders anliegende Spannung abgreift und das Triggersignal abgibt, wenn ein Betrag der abgegriffenen Spannung einen vorgegebenen Schwellenwert überschreitet. Das Überschreiten des Schwellenwerts steht dabei in direktem Zusammenhang mit der Abgabe eines Lichtpulses durch die Lichtquelle. Dadurch wird der Einfluss von Latenzen, die zwischen einer Abgabe eines Aktivierungssignals durch die Steuer- und Auswerteeinheit an den Lichtsender und der Abgabe eines Strom- beziehungsweise Spannungspulses an die Lichtquelle und somit der Emission des Lichtpulses durch die Lichtquelle auftreten, auf die Messung der Lichtlaufzeit verringert.

Der Lichtsender kann einen Lichtquellentreiber zur Stromversorgung der Lichtquelle aufweisen. Damit können Spannung und Strom, die von der Lichtquelle benötigt werden, auf die Lichtquelle eingestellt und die Lichtquelle vor Beschädigung geschützt werden. Die Lichtquelle kann bevorzugt eine Laserdiode oder eine Leuchtdiode sein.

Zum Abgreifen der an der Lichtquelle des Lichtsenders anliegenden Spannung kann die Triggerschaltung einen Spannungsteiler aufweisen. Durch eine geeignete Dimensionierung des Spannungsteilers kann zum einen die Belastung der Elektronik des Lichtquellentreibers und/oder der Lichtquelle reduziert werden, zum anderen kann ein für eine nachfolgende Auswerteelektronik der Triggerschaltung geeigneter Teil der abgegriffenen Spannung bereitgestellt werden.

Der Spannungsabgriff kann vorzugsweise an einer Kathode der Lichtquelle erfolgen. Dies hat den Vorteil, dass die abgegriffene Spannung im Wesentlichen den Strom durch die Lichtquelle repräsentiert. Dadurch wird gewährleistet, dass alle Latenzen der am Bereitstellen des Stroms für die Lichtquelle beteiligten Komponenten, insbesondere deren thermische Abhängigkeit, berücksichtigt werden können.

In einer Ausführungsform kann die Auswerteelektronik der Triggerschaltung zur Weiterverarbeitung der abgegriffenen Spannung oder der vom Spannungsteiler bereitgestellten Spannung einen Komparator aufweisen, der ein Ausgangssignal als Triggersignal für die Zeitmesseinheit liefert. Der Komparator ist vorzugsweise ein Komparator mit differentiellen Ausgängen, womit eine kurze Durchlaufzeit sowie schnelle Anstiegs- und Abfallzeiten des Ausgangssignals erreicht werden können. Zur Umwandlung eines differentiellen Ausgangssignals des Komparators in ein unipolares Ausgangssignal kann dem Komparator ein Signalwandler nachgeordnet sein.

In einer bevorzugten Ausführungsform kann die Triggerschaltung zur Weiterverarbeitung der abgegriffenen Spannung oder der vom Spannungsteiler bereitgestellten Spannung eine monostabile Kippstufe (Monoflop) aufweisen, wobei die an der Lichtquelle abgegriffene Spannung beziehungsweise die vom Spannungsteiler bereitgestellte Spannung als Eingangssignal für die monostabile Kippstufe dient und das Triggersignal für die Zeitmesseinheit auf Basis eines Ausgangssignals der monostabilen Kippstufe erzeugt wird

Die monostabile Kippstufe weist einen ersten und einen zweiten Transistor auf, wobei die an der Lichtquelle abgegriffene Spannung oder die vom Spannungsteiler bereitgestellte Spannung als Eingangssignal der monostabilen Kippstufe bevorzugt an der Basis des ersten Transistors anliegen kann. Die Kollektorspannung des ersten Transistors bildet das Ausgangssignal der monostabilen Kippstufe als Triggersignal für die Zeitmesseinheit. Der erste Transistor der Kippstufe kann gleichspannungsfrei durch das Eingangssignal vom leitenden in den gesperrten Zustand gebracht werden. Dadurch wird der zweite Transistor leitend und ein Einstellen einer Haltezeit der monostabilen Kippstufe, also des Ausganssignals der monostabilen Kippstufe ermöglicht.

Die Kollektor-Basis-Strecke des ersten Transistors kann eine Reihenschaltung aufweisen, die eine erste Diode und einen Dämpfungswiderstand umfasst. Damit kann eine Sättigung des ersten Transistors im leitenden Zustand verhindert werden, wodurch ein schnelles Sperren des ersten Transistors ermöglicht wird. Des Weiteren erfolgt durch die erste Diode eine Spannungsgegenkopplung, die einem Temperaturgang des ersten Transistors entgegenwirkt. Dies führt zu einer Arbeitspunktstabilisierung des ersten Transistors.

Die Basis-Emitter-Strecke des ersten Transistors kann eine zweite Diode aufweisen. Dadurch kann die Basis-Emitter-Strecke des ersten Transistors vor schädlichen negativen Spannungen geschützt werden.

Die Kollektorspannung des ersten Transistors kann bevorzugt derart AC-gekoppelt sein, dass eine aufgrund der fehlenden Sättigung des ersten Transistors zwischen Kollektor und Emitter anliegende Restspannung im Ruhezustand der monostabilen Kippstufe, also wenn ein Betrag der an der Lichtquelle des Lichtsenders anliegenden Spannung einen vorgegebenen Schwellenwert nicht überschreitet, kompensiert werden kann. Damit weist das Ausgangssignal der monostabilen Kippstufe im Ruhezustand der monostabilen Kippstufe eine Spannung von 0 Volt auf.

Im Folgenden wird die Erfindung anhand eines Ausführungsbeispiels unter Bezugnahme auf die Zeichnung im Einzelnen erläutert. In der Zeichnung zeigen:
- Figur 1: eine schematische Darstellung eines erfindungsgemäßen optoelektronischen Sensors;
- Figur 2: ein schematisches Ausführungsbeispiel einer Triggerschaltung eines erfindungsgemäßen optoelektronischen Sensors
- Figur 3: einen beispielhaften Signalverlauf einer an einer Lichtquelle des Sensors abgegriffenen Spannung und eines Triggersignals

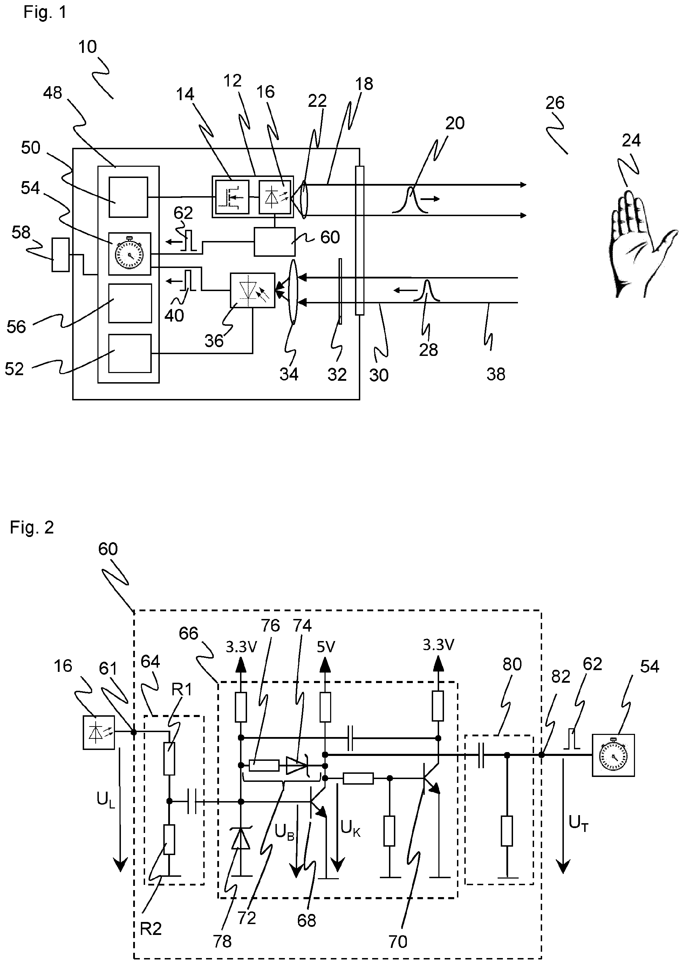

Figur 1 zeigt eine schematische Darstellung eines erfindungsgemäßen optoelektronischen Sensors 10. Der Sensor 10 weist einen Lichtsender 12 auf, der einen Lichtquellentreiber 14 und eine Lichtquelle 16, beispielsweise eine Laserdiode oder einen Oberflächenemitter (vertical-cavity surface-emitting laser (VCSEL)) umfasst. Die Lichtquelle 16 emittiert einen Messlichtstrahl 18 mit wenigstens einem Lichtpuls 20. Der Lichtquelle 16 ist in Lichtstrahlrichtung eine Kollimationsoptik 22 zur Kollimation des Messlichtstrahls 18 nachgeordnet. Die Kollimationsoptik 22 ist hier rein beispielhaft als bikonvexe Linse dargestellt, kann aber einen komplexeren Aufbau aufweisen, beispielsweise als ein mehrere Linsen aufweisendes Objektiv ausgebildet sein.

Der wenigstens eine an einem Objekt 24 im Überwachungsbereich 26 reflektierte oder remittierte Lichtpuls 28 wird als Empfangslichtstrahl 30 über ein (optionales) optisches Filter 32 zur Unterdrückung von Störlicht und eine Empfangsoptik 34 auf einen Lichtempfänger 36 geleitet, der beim Empfang der reflektierten oder remittierten Lichtpulse 28 Empfangssignale 40 erzeugt.

Der Lichtempfänger 36 ist bevorzugt als Photodiode, APD (Avalanche Photo Diode), oder SPAD (Single-Photon Avalanche Diode), oder SPAD Matrix (SPAD Array) ausgebildet.

In dem Sensor 10 ist weiterhin eine Steuer- und Auswertungseinheit 48 vorgesehen, die mit dem Lichtsender 12, und dem Lichtempfänger 36 verbunden ist. Die Steuer- und Auswerteeinheit 48 umfasst eine Lichtsendersteuerung 50, Lichtempfängersteuerung 52 eine Zeitmesseinheit 54, beispielsweise einen Time-to-Digital-Converter (TDC), und eine Objektentfernungsschätzeinheit 56, wobei dies zunächst nur funktionale Blöcke sind, die auch in gleicher Hardware oder in anderen funktionalen Einheiten wie in der Lichtsendersteuerung 50, der Lichtempfängersteuerung 52, oder im Lichtempfänger 46 implementiert sein können. Über eine Schnittstelle 58 kann die Steuer- und Auswertungseinheit 48 Messdaten ausgeben, beziehungsweise umgekehrt Steuer- und Parametrieranweisungen entgegennehmen. Die Steuer- und Auswertungseinheit 48 kann auch in Form von lokalen Auswertungsstrukturen auf einem Chip des Lichtempfängers 46 angeordnet sein, oder als Teilimplementierung mit den Funktionen einer zentralen Auswertungseinheit (nicht gezeigt) zusammenwirken.

Der Sensor 10 weist weiterhin eine Triggerschaltung 60 auf. Die Triggerschaltung 60 ist ebenfalls als funktionaler Block dargestellt und kann als eigene Hardware oder in anderen funktionalen Einheiten des Sensors 10 implementiert sein. Die Triggerschaltung 60 greift eine an der Lichtquelle 16 des Lichtsenders 12 anliegende Spannung ab und gibt ein Triggersignal 62 an die Zeitmesseinheit 54 ab, wenn ein Betrag der abgegriffenen Spannung einen vorgegebenen Schwellenwert überschreitet, wobei das Überschreiten des Schwellenwertes eine Abgabe eines Lichtpulses 20 durch die Lichtquelle 16 repräsentiert. Das Triggersignal 62 startet eine Lichtlaufzeitmessung der Zeitmesseinheit 54. Der abgegebene Lichtpuls 20 wird von dem Objekt 24 im Überwachungsbereich 26 reflektiert oder remittiert, wobei der Lichtempfänger 36 bei Detektion des reflektierten oder remittierten Lichtpulses 28 ein Empfangssignal 40 erzeugt. Das Empfangssignal 40 wird an die Zeitmesseinheit 54 übermittelt, die die Lichtlaufzeitmessung stoppt, einen zeitlichen Abstand von Triggersignal 62 und Empfangsignal 40 bestimmt und daraus eine Lichtlaufzeit des Lichtpulses ermittelt. Die Lichtlaufzeit wird an die Objektentfernungsschätzeinheit 54 übermittelt, die auf Basis der Lichtlaufzeit einen Abstand des Objekts 24 zum Sensor 10 bestimmt.

Figur 2 zeigt ein schematisches Ausführungsbeispiel einer Triggerschaltung 60 des erfindungsgemäßen Sensors 10. Am Schaltungseingang 61 der Triggerschaltung 60 erfolgt ein Abgriff einer an der Lichtquelle 16 des Sensors 10 anliegenden Spannung U_{L} durch einen Spannungsteiler 64. Durch eine geeignete Dimensionierung des Spannungsteilers 64 wird eine Rückwirkung der Spannungsmessung auf den durch die Lichtquelle 16 fließenden Strom minimiert. Der Spannungsteiler 64 weist einen ersten Widerstand R1 und einen zweiten Widerstand R2 auf, deren Widerstandsverhältnis derart gewählt ist, dass die am Widerstand R2 anliegende Spannung in einem für eine dem Spannungsteiler 64 nachgeschaltete monostabile Kippstufe 66 zulässigen Bereich liegt. Die am Widerstand R2 anliegende Spannung dient als Eingangssignal für die monostabile Kippstufe 66 und liegt dort als Basisspannung U_{B} an einem ersten Transistor 68 an. Der erste Transistor 68 wird durch dieses Eingangssignal gleichspannungsfrei von einem leitenden in einen gesperrten Zustand gebracht, wodurch ein zweiter Transistor 70 durch das Sperren des ersten Transistors 68 leitend wird. Die am ersten Transistor 68 anliegende Kollektorspannung U_{K} bildet das Ausgangssignal der monostabilen Kippstufe 66 und dient als Basis des Triggersignals 62 für die Zeitmesseinheit 54.

Die Basis-Kollektor Strecke 72 des ersten Transistors 68 weist eine erste Diode 74 in Reihe mit einem Dämpfungswiderstand 76 auf. Dadurch wird eine Sättigung des ersten Transistors 68 verhindert, wenn ein Betrag der an der Lichtquelle 16 des Sensors 10 anliegenden Spannung U_{L} einen vorgegebenen Schwellenwert nicht überschreitet, und somit ein schnelles Sperren des ersten Transistors 68 ermöglicht. Des Weiteren erfolgt durch die erste Diode 74 eine Spannungsgegenkopplung, die einem Temperaturgang des ersten Transistors 68 entgegenwirkt und zur Arbeitspunktstabilisierung des ersten Transistors 68 beiträgt. Der Temperaturgang des zweiten Transistors 70 ist durch dessen Betrieb in Sättigung vernachlässigbar. Haltezeit und Amplitude des Ausgangssignals der monostabilen Kippstufe 66 sind im Rahmen fachüblicher Möglichkeiten einstellbar. Die Basis-Emitter-Strecke des ersten Transistors 68 wird von einer zweiten Diode 78 vor schädlichen negativen Spannungen geschützt.

Wegen der Verhinderung der Sättigung des ersten Transistors 68, kann das Ausgangsignal der monostabilen Kippstufe 66 im Ruhezustand der monostabilen Kippstufe 66, also wenn ein Betrag der an der Lichtquelle 16 anliegenden Spannung U_{L} einen vorgegebenen Schwellenwert nicht überschreitet, nicht 0 Volt werden, sondern eine Restspannung aufweisen. Daher ist dem Ausgang der monostabilen Kippstufe 66 eine AC-Kopplung 80 nachgeschaltet, damit das Triggersignal 62 am Schaltungsausgang 82 der Triggerschaltung 60 im Ruhezustand eine Spannung U_{T} von 0 Volt aufweist. Um eine ausreichende Spannungsamplitude des Triggersignals 62 zu erreichen, muss der Kollektorzweig des ersten Transistors mit einer höheren Spannung versorgt werden, als von der nachfolgenden Elektronik, insbesondere der Zeitmesseinheit 54, als Signalamplitude benötigt wird. Eine minimale Betriebsspannung des Kollektorzweiges des ersten Transistors 68 ergibt sich dabei aus der Kollektor-Emitterspannung des ersten Transistors 68 im Ruhezustand und der von der nachfolgenden Elektronik benötigten Mindestspannung, so dass der Kollektorzweig des ersten Transistors 66 gegebenenfalls mit einer höheren Spannung versorgt werden muss als von der nachfolgenden Elektronik benötigt.

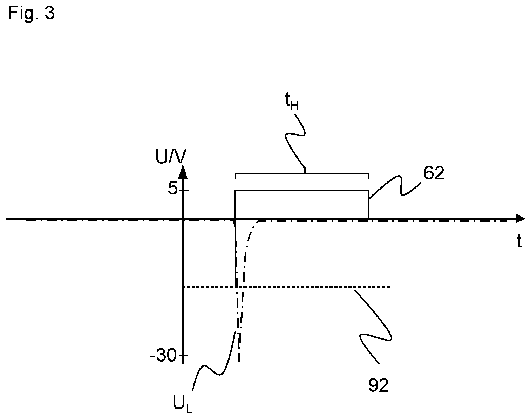

Figur 3 zeigt einen beispielhaften zeitlichen Verlauf der an der Lichtquelle 16 des Sensors abgegriffenen Spannung U_{L} (dargestellt durch eine strichpunktierte Linie) und des von der Triggerschaltung 60 erzeugten Triggersignals 62 (dargestellt durch eine durchgezogene Linie) am Ausgang der Triggerschaltung 60. Überschreitet der Betrag der an der Lichtquelle 16 anliegenden Spannung U_{L} einen vorgegebenen Schwellenwert 92, sperrt der erste Transistor 68 der monostabilen Kippstufe 60. Das Spannungssignal am Eingang der monostabilen Kippstufe 60 hat eine zeitliche Länge von weniger als einer Nanosekunde. Die am Kollektor des ersten Transistors 68 anliegende Spannung U_{K} bildet die Basis für das von der Triggerschaltung 60 ausgegebene Triggersignal 62. Die führende Flanke des Triggersignals 62 entspricht dabei zeitlich im Wesentlichen, also im Rahmen der Schaltgeschwindigkeit der monostabilen Kippstufe 60, der fallenden Flanke der an der Lichtquelle 16 des Sensors 10 abgegriffenen Spannung U_{L}. Die Haltezeit t_{H} des Triggersignals 62 übersteigt die Dauer des Spannungssignals am Eingang der monostabilen Kippstufe 60 entsprechend den Anforderungen der Zeitmesseinheit 54 deutlich. Der Spannungsanstieg des Triggersignals 62 ist streng monoton und seine Amplitude überschreitet eine Detektionsschwelle der Zeitmesseinheit 54 für die gesamte Haltezeit t_{H} des Triggersignals 62.

## Patentansprüche

1. Optoelektronischer Sensor (10) zur Erfassung und Abstandsbestimmung eines Objekts (24) in einem Überwachungsbereich (26) mit einem eine Lichtquelle (16) aufweisenden Lichtsender (12) zum Aussenden wenigstens eines Lichtpulses (20), einem Lichtempfänger (36) zum Erzeugen eines Empfangssignals (40) aus dem von dem Objekt (24) remittierten oder reflektierten Lichtpuls (28) sowie mit einer Steuer- und Auswerteeinheit (48), die dafür ausgebildet ist, den Lichtsender (12) anzusteuern und eine Lichtlaufzeit und daraus einen Abstand des Objekts (24) zum Sensor (10) zu bestimmen, wobei die Steuer- und Auswerteeinheit (48) eine Zeitmesseinheit (54) aufweist, die dazu eingerichtet ist, das Empfangssignal (40) und ein Triggersignal (62) zu empfangen und die Lichtlaufzeit aus einem zeitlichen Abstand von Triggersignal (62) und Empfangssignal (40) zu bestimmen,
**dadurch gekennzeichnet, dass**
der Sensor (10) eine Triggerschaltung (60) aufweist, die dazu eingerichtet ist, eine an der Lichtquelle (16) des Lichtsenders (12) anliegende Spannung (U_{L}) abzugreifen und das Triggersignal (62) abzugeben, wenn ein Betrag der abgegriffenen Spannung (U_{L}) einen vorgegebenen Schwellenwert (92) überschreitet.

2. Sensor (10) nach Anspruch 1, wobei der Lichtsender (12) einen Lichtquellentreiber (14) zur Stromversorgung der Lichtquelle (16) aufweist.

3. Sensor (10) nach einem der vorhergehenden Ansprüche, wobei die Triggerschaltung einen Spannungsteiler (64) zum Abgreifen der an der Lichtquelle (16) des Lichtsenders (12) anliegenden Spannung (U_{L}) aufweist.

4. Sensor (10) nach einem der vorhergehenden Ansprüche, wobei die an der Lichtquelle (16) des Lichtsenders (12) anliegende Spannung (U_{L}) an einer Kathode der Lichtquelle (16) abgegriffen wird.

5. Sensor (10) nach einem der vorhergehenden Ansprüche, wobei die Triggerschaltung (60) einen Komparator zur Erzeugung des Triggersignals (62) aufweist.

6. Sensor (10) nach einem der Ansprüche 1 bis 4, wobei die Triggerschaltung (60) eine monostabile Kippstufe (66) zur Erzeugung des Triggersignals (62) aufweist.

7. Sensor (10) nach Anspruch 6, wobei die monostabile Kippstufe (66) dazu eingerichtet ist, einen ersten Transistor (68) der monostabilen Kippstufe (66) von einem leitenden Zustand in einen sperrenden Zustand zu überführen, wenn der Betrag der an der Lichtquelle (16) des Lichtsenders (12) anliegenden Spannung (U_{L}) einen vorgegebenen Schwellenwert überschreitet.

8. Sensor (10) nach Anspruch 7, wobei die Triggerschaltung (60) dazu eingerichtet ist, das Triggersignal (62) auf Basis einer Kollektorspannung (U_{K}) des ersten Transistors (68) zu erzeugen.

9. Sensor (10) nach Anspruch 7 oder 8, wobei eine Basis-Kollektor-Strecke (72) des ersten Transistors (68) eine Reihenschaltung mit einer ersten Diode (74) und einem Dämpfungswiderstand (76) zur Verhinderung einer Sättigung des ersten Transistors (68) aufweist.

10. Sensor (10) nach einem der Ansprüche 7 bis 9, wobei eine Basis-Emitter-Strecke des ersten Transistors (68) eine zweite Diode (78) zum Schutz der Basis-Emitter-Strecke vor negativen Spannungen aufweist.

11. Sensor (10) nach einem der Ansprüche 6 bis 10, wobei der monostabilen Kippstufe (66) eine AC-Kopplung (80) nachgeordnet ist.

12. Triggerschaltung (60) in einem optoelektronischen Sensor (10) nach Anspruch 1 zur Erzeugung eines Triggersignals (62) zum Starten einer Lichtlaufzeitmessung umfassend
- einen Schaltungseingang (61) zum Abgreifen einer an der Lichtquelle (16) des Sensors (10) anliegenden Spannung (U_{L})
- eine monostabile Kippstufe (66), wobei die monostabile Kippstufe (66) dazu eingerichtet ist, das Triggersignal (62) auf Basis der an der Lichtquelle (16) des Sensors (10) anliegenden Spannung (U_{L}) zu erzeugen.
- einen Schaltungsausgang (82) zum Bereitstellen des Triggersignals (62).

13. Triggerschaltung (60) nach Anspruch 12, wobei die Triggerschaltung (60) einen Spannungsteiler (64) aufweist.

14. Triggerschaltung (60) nach Anspruch 12 oder 13, wobei die monostabile Kippstufe (66) dazu eingerichtet ist, einen ersten Transistor (68) der monostabilen Kippstufe (66) von einem leitenden Zustand in einen sperrenden Zustand zu überführen, wenn ein Betrag der an der Lichtquelle (16) des Sensors (10) anliegenden Spannung (U_{L}) einen vorgegebenen Schwellenwert überschreitet.

15. Triggerschaltung (60) nach Anspruch 14, wobei eine Basis-Kollektor-Strecke (72) des ersten Transistors (68) eine Reihenschaltung mit einer ersten Diode (74) und einem Dämpfungswiderstand (76) zur Verhinderung einer Sättigung des ersten Transistors (68) im leitenden Zustand aufweist.

## Claims

1. Optoelectronic sensor (10) for detecting and determining the distance of an object (24) in a monitoring area (26), having a light emitter (12) which has a light source (16) and is intended for emitting at least one light pulse (20), having a light receiver (36) for generating a received signal (40) from the light pulse (28) which is remitted or reflected by the object (24), and having a control and evaluation unit (48) which is designed to control the light emitter (12) and to determine a time-of-flight of the light and, from this, to determine a distance of the object (24) from the sensor (10), the control and evaluation unit (48) having a timing unit (54) which is set up to receive the received signal (40) and a trigger signal (62) and to determine the time-of-flight of the light from a time interval between the trigger signal (62) and the receive signal (40),
**characterized in that**
the sensor (10) has a trigger circuit (60) which is set up to pick up a voltage (U_{L}) applied to the light source (16) of the light emitter (12) and to output the trigger signal (62) when a magnitude of the picked-up voltage (U_{L}) exceeds a predetermined threshold value (92) .

2. Sensor (10) according to claim 1, wherein the light emitter (12) comprises a light source driver (14) for supplying power to the light source (16).

3. Sensor (10) according to any one of the preceding claims, wherein the trigger circuit comprises a voltage divider (64) for picking up the voltage (U_{L}) applied to the light source (16) of the light emitter (12).

4. Sensor (10) according to any one of the preceding claims, wherein the voltage (U_{L}) applied to the light source (16) of the light emitter (12) is picked up at a cathode of the light source (16).

5. Sensor (10) according to any one of the preceding claims, wherein the trigger circuit (60) comprises a comparator for generating the trigger signal (62).

6. Sensor (10) according to any one of the claims 1 to 4, wherein the trigger circuit (60) comprises a monostable flip-flop (66) for generating the trigger signal (62).

7. Sensor (10) according to claim 6, wherein the monostable flip-flop (66) is arranged to transfer a first transistor (68) of the monostable flip-flop (66) from a conductive state to a blocking state when the magnitude of the voltage (U_{L}) applied to the light source (16) of the light emitter (12) exceeds a predetermined threshold.

8. Sensor (10) according to claim 7, wherein the trigger circuit (60) is arranged to generate the trigger signal (62) based on a collector voltage (U_{K}) of the first transistor (68).

9. Sensor (10) according to claim 7 or 8, wherein a base-collector path (72) of the first transistor (68) comprises a series connection with a first diode (74) and a damping resistor (76) for preventing saturation of the first transistor (68).

10. Sensor (10) according to any one of the claims 7 to 9, wherein a base-emitter path of the first transistor (68) comprises a second diode (78) for protecting the base-emitter path from negative voltages.

11. Sensor (10) according to any one of the claims 7 to 10, wherein an AC coupling (80) is arranged downstream of the monostable flip-flop (66).

12. Trigger circuit (60) in an optoelectronic sensor (10) according to claim 1 for generating a trigger signal (62) for starting a time-of-flight measurement, comprising
- a circuit input (61) for picking up a voltage (U_{L}) applied to the light source (16) of the sensor (10),
- a monostable flip-flop (66), the monostable flip-flop (66) being arranged to generate the trigger signal (62) on the basis of the voltage (U_{L}) applied to the light source (16) of the sensor (10),
- a circuit output (82) for providing the trigger signal (62).

13. Trigger circuit (60) according to claim 12, wherein the trigger circuit (60) comprises a voltage divider (64).

14. Trigger circuit (60) according to claim 12 or 13, wherein the monostable flip-flop (66) is arranged to transfer a first transistor (68) of the mono stable flip-flop (66) from a conducting state to a blocking state when a magnitude of the voltage (U_{L}) applied to the light source (16) of the sensor (10) exceeds a predetermined threshold.

15. Trigger circuit (60) according to claim 14, wherein a base-collector path (72) of the first transistor (68) comprises a series connection with a first diode (74) and a damping resistor (76) for preventing saturation of the first transistor (68) in the conducting state.

## Revendications

1. Capteur optoélectronique (10) pour détecter et déterminer la distance d'un objet (24) dans une zone de surveillance (26), ayant un émetteur de lumière (12) qui a une source lumineuse (16) et est destiné à émettre au moins une impulsion lumineuse (20), ayant un récepteur de lumière (36) pour générer un signal reçu (40) à partir de l'impulsion lumineuse (28) qui est renvoyée ou réfléchie par l'objet (24), et ayant une unité de commande et d'évaluation (48) conçue pour commander l'émetteur de lumière (12) et pour déterminer un temps de vol de la lumière et, à partir de là, pour déterminer une distance de l'objet (24) par rapport au capteur (10), l'unité de commande et d'évaluation (48) ayant une unité de synchronisation (54) configurée pour recevoir le signal reçu (40) et un signal de déclenchement (62) et pour déterminer le temps de vol de la lumière à partir d'un intervalle de temps entre le signal de déclenchement (62) et le signal reçu (40), **caractérisé en ce que**
le capteur (10) comprend un circuit de déclenchement (60) qui est configuré pour capter une tension (U_{L}) appliquée à la source lumineuse (16) de l'émetteur de lumière (12) et pour émettre le signal de déclenchement (62) lorsqu'une magnitude de la tension captée (U_{L}) dépasse une valeur seuil prédéterminée (92).

2. Capteur (10) selon la revendication 1, dans lequel l'émetteur de lumière (12) comprend un pilote de source de lumière (14) pour alimenter la source lumineuse (16).

3. Capteur (10) selon l'une des revendications précédentes, dans lequel le circuit de déclenchement comprend un diviseur de tension (64) pour capter la tension (U_{L}) appliquée à la source lumineuse (16) de l'émetteur de lumière (12).

4. Capteur (10) selon l'une des revendications précédentes, dans lequel la tension (U_{L}) appliquée à la source lumineuse (16) de l'émetteur de lumière (12) est captée à une cathode de la source lumineuse (16).

5. Capteur (10) selon l'une des revendications précédentes, dans lequel le circuit de déclenchement (60) comprend un comparateur pour générer le signal de déclenchement (62).

6. Capteur (10) selon l'une des revendications 1 à 4, dans lequel le circuit de déclenchement (60) comprend une bascule monostable (66) pour générer le signal de déclenchement (62).

7. Capteur (10) selon la revendication 6, dans lequel la bascule monostable (66) est configurée pour transférer un premier transistor (68) de la bascule monostable (66) d'un état conducteur à un état bloquant lorsque la magnitude de la tension (U_{L}) appliquée à la source lumineuse (16) de l'émetteur de lumière (12) dépasse un seuil prédéterminé.

8. Capteur (10) selon la revendication 7, dans lequel le circuit de déclenchement (60) est configuré pour générer le signal de déclenchement (62) sur la base d'une tension de collecteur (U_{K}) du premier transistor (68).

9. Capteur (10) selon la revendication 7 ou 8, dans lequel un chemin base-collecteur (72) du premier transistor (68) comprend une connexion en série avec une première diode (74) et une résistance d'amortissement (76) pour empêcher la saturation du premier transistor (68).

10. Capteur (10) selon l'une des revendications 7 à 9, dans lequel un chemin base-émetteur du premier transistor (68) comprend une deuxième diode (78) pour protéger le chemin base-émetteur des tensions négatives.

11. Capteur (10) selon l'une des revendications 7 à 10, dans lequel un couplage AC (80) est disposé en aval de la bascule monostable (66).

12. Circuit de déclenchement (60) dans un capteur optoélectronique (10) selon la revendication 1 pour générer un signal de déclenchement (62) pour démarrer une mesure de temps de vol, comprenant
- une entrée de circuit (61) pour capter une tension (U_{L}) appliquée à la source lumineuse (16) du capteur (10),
- une bascule monostable (66), la bascule monostable (66) étant configurée pour générer le signal de déclenchement (62) sur la base de la tension (U_{L}) appliquée à la source lumineuse (16) du capteur (10),
- une sortie de circuit (82) pour fournir le signal de déclenchement (62).

13. Circuit de déclenchement (60) selon la revendication 12, dans lequel le circuit de déclenchement (60) comprend un diviseur de tension (64).

14. Circuit de déclenchement (60) selon la revendication 12 ou 13, dans lequel la bascule monostable (66) est configurée pour transférer un premier transistor (68) de la bascule monostable (66) d'un état conducteur à un état bloquant lorsqu'une magnitude de la tension (U_{L}) appliquée à la source lumineuse (16) du capteur (10) dépasse un seuil prédéterminé.

15. Circuit de déclenchement (60) selon la revendication 14, dans lequel un chemin base-collecteur (72) du premier transistor (68) comprend une connexion en série avec une première diode (74) et une résistance d'amortissement (76) pour empêcher la saturation du premier transistor (68) à l'état conducteur.
